# EUROPÄISCHE PATENTSCHRIFT

(11) **EP 3 666 690 B1**
(45) Veröffentlichungstag und Bekanntmachung des Hinweises auf die Patenterteilung: **09.04.2025**
(21) Anmeldenummer: 19209963.8
(22) Anmeldetag: 19.11.2019
(51) Int. Cl.: G06Q 10/08, B65G 1/137, G06Q 10/087

(54) **VERFAHREN ZUM KOMMISSIONIEREN VON EINZELARTIKELN IN EINER HÄNGEFÖRDERANLAGE SOWIE DERARTIGE HÄNGEFÖRDERANLAGE**
METHOD FOR PICKING INDIVIDUAL ITEMS IN A SUSPENSION CONVEYOR SYSTEM AND CORRESPONDING SUSPENSION CONVEYOR SYSTEM
PROCÉDÉ DE PRÉPARATION DE COMMANDES D'ARTICLES INDIVIDUELS DANS UNE INSTALLATION DE TRANSPORT SUSPENDUE AINSI QU'UNE TELLE INSTALLATION DE TRANSPORT SUSPENDUE

(30) Priorität: 05.12.2018 DE 102018221043
(43) Veröffentlichungstag der Anmeldung: 17.06.2020
(73) Patentinhaber: Dürkopp Fördertechnik GmbH, 33719 Bielefeld (DE)
(72) Erfinder: Sieksmeier, Dirk, 32139 Spenge (DE)
(74) Vertreter: Rau, Schneck & Hübner Patentanwälte Rechtsanwälte PartGmbB

(56) Entgegenhaltungen:
- EP-A1- 0 457 158
- WO-A1-2018/218266
- DE-A1- 102011 103 194
- DE-B3- 102011 104 511
- US-A1- 2018 025 410

## Beschreibung

Die vorliegende Patentanmeldung nimmt die Priorität der deutschen Patentanmeldung DE 10 2018 221 043.8 in Anspruch.

Die Erfindung betrifft ein Verfahren zum Kommissionieren von Einzelartikeln in einer Hängeförderanlage sowie eine derartige Hängeförderanlage. Ein Verfahren zum Kommissionieren von Artikeln ist aus DE 10 2011 104 511 B3 bekannt, welche den Oberbegriff der Ansprüche 1 sowie 11 offenbart.

Dieses Verfahren erfordert eine aufwändige Bestimmung einer Analysemenge, um Artikel aus einem Langzeitlager artikelrein in ein Kurzzeitlager zu transportieren. Weitere Kommissionierverfahren sind bekannt aus DE 10 2011 103 194 A1, EP 0 457 158 A1, WO 2018/218 266 A1 und US 2018/0 025 410 A1.

Es ist eine Aufgabe der vorliegenden Erfindung, das Kommissionieren von Einzelartikeln zu verbessern, so dass insbesondere eine Hängeförderanlage gleichmäßiger ausgelastet ist.

Diese Aufgabe ist erfindungsgemäß gelöst durch ein Verfahren mit den im Anspruch 1 angegebenen Merkmalen und durch eine Hängeförderanlage mit den im Anspruch 11 angegebenen Merkmalen.

Erfindungsgemäß wurde erkannt, dass eine gleichmäßige Auslastung einer Hängeförderanlage dadurch möglich ist, dass zum Kommissionieren von Einzelartikeln diese aus einem Artikellager vereinzelt in einen Auftragszwischenspeicher gefördert werden. Das Fördern der Einzelartikel in den Auftragszwischenspeicher erfolgt insbesondere automatisiert, insbesondere vollautomatisiert. Insbesondere werden die Einzelartikel nicht artikelrein aus dem Artikellager in den Auftragszwischenspeicher gefördert. Die Einzelartikel sind insbesondere vereinzelt in Transporttaschen in dem Artikellager gelagert. Insbesondere ist jeweils genau ein Artikel in einer Transporttasche angeordnet. Die Transporttasche wird hängend in der Hängeförderanlage entlang einer Förderschiene gefördert. Zum Fördern der Transporttasche dient ein Adapter, insbesondere ein sogenannter Rolladapter, der in der Förderschiene geführt wird. Über die Identifikation der Transporttasche ist der Einzelartikel eindeutig identifizierbar. Das Artikellager ist insbesondere ein Taschenlager, das auch als Bagstore bezeichnet wird.

Die Einzelartikel werden vereinzelt gezielt aus dem Artikellager ausgelagert und in den Auftragszwischenspeicher gefördert. Es ist eine stückzahlgenaue Transferierung von Einzelwaren möglich. Insbesondere erfolgt ein nicht-artikelreines Fördern der Einzelartikel aus dem Artikellager in den Auftragszwischenspeicher. Nicht-artikelrein bedeutet, dass nicht identische, also verschiedene Einzelartikel, ausgelagert und gefördert werden. Insbesondere werden Einzelartikel unterschiedlichen Typs aus dem Artikellager ausgelagert werden. Unterschiedliche Artikeltypen sind beispielsweise auch dann gegeben, wenn sich Bekleidungsstücke ausschließlich in der Farbe und/oder der Größe voneinander unterscheiden.

Der Erfindung liegt auch die Erkenntnis zugrunde, dass es nicht erforderlich ist, eine Gesamtzahl gleicher Artikel über mehrere Aufträge hinweg zu definieren, um eine artikelreine Förderung aus dem Artikellager zu ermöglichen. Dieser vorgelagerte Analyseschritt ist bei dem erfindungsgemäßen Verfahren entbehrlich. Das erfindungsgemäße Verfahren ist vereinfacht. Das erfindungsgemäße Verfahren ist schneller durchführbar. Das Verfahren ist flexibel. Der Platzbedarf für den Auftragszwischenspeicher ist reduziert. Die Investitions- und Instandhaltungskosten für die Hängeförderanlage sind reduziert.

Der Auftragszwischenspeicher weist insbesondere eine Speicherbahn auf, in der die Einzelartikel eines Auftrags zwischengespeichert werden. Der Auftragszwischenspeicher wird auch als Runbuffer bezeichnet. Die Speicherbahn des Auftragszwischenspeichers wird auch als Runbufferbahn bezeichnet. Der Auftragszwischenspeicher weist insbesondere mehrere, beispielsweise mindestens fünf, insbesondere mindestens zehn, insbesondere mindestens zwanzig oder mehr Speicherbahnen auf.

Die Einzelartikel eines vollständigen Auftrags oder mehrerer vollständiger Aufträge werden aus dem Auftragszwischenspeicher, insbesondere der dem Auftrag zugeordneten Speicherbahn, ausgelagert und zum Sortieren in eine Sortiereinheit gefördert. Die Sortiereinheit ist mit dem Auftragszwischenspeicher fördertechnisch verbunden. Der Auftragszwischenspeicher ist mit dem Artikellager fördertechnisch verbunden. Die Sortiereinheit ist insbesondere als Matrixsorter ausgeführt. Insbesondere erfolgt die Förderung der Einzelartikel in die Sortiereinheit, sobald die Einzelartikel des Auftrags bzw. der Aufträge in dem Auftragszwischenspeicher vollständig angeordnet sind. Dazu ist insbesondere am Eingang des Auftragszwischenspeichers, insbesondere am Eingang der jeweiligen Speicherbahnen, mindestens eine Identifikationseinheit angeordnet, die die eingehenden Einzelartikel identifiziert. Insbesondere erfolgt die Identifikation über das Lesen von RFID-Chips, die den Transporttaschen eindeutig zugeordnet sind. Insbesondere sind die RFID-Chips an einem Adapter, der zum Transport der Transporttasche in dem Schienensystem der Hängeförderanlage verwendet wird, integriert. Die mindestens eine Identifikationseinheit ist insbesondere mit einer Steuerungseinheit in Signalverbindung.

Die Steuerungseinheit ist geeignet, eine Materialflusssoftware zu speichern und auszuführen. Die Steuerungseinheit mit der Materialflusssoftware bildet ein Warehouse Control System (WCS). Die Steuerungseinheit dient zum Erstellen einer Auftragsliste, die mindestens einen Auftrag aufweist. Die Auftragsliste kann auch mehrere Aufträge umfassen, insbesondere mindestens zwei Aufträge, insbesondere mindestens vier Aufträge, insbesondere mindestens fünf Aufträge, insbesondere mindestens zehn Aufträge, insbesondere mindestens 20 Aufträge, insbesondere mindestens 50 Aufträge und insbesondere bis zu 200 Aufträge oder mehr. Die Auftragsliste wird auch als Run bezeichnet. Die Auftragsliste umfasst mehrere Einzelartikel. Die sortierten, zu einem Auftrag kommissionierten Einzelartikel werden aus der Sortiereinheit zu einem Packplatz gefördert. Der Packplatz ist insbesondere fördertechnisch mit der Sortiereinheit verbunden. Insbesondere weist die Hängeförderanlage mehrere Packplätze auf. An dem Packplatz werden die Einzelartikel des Auftrags verpackt und für die Auslieferung, insbesondere an einen Kunden, vorbereitet. Insbesondere werden die Einzelartikel aus den Transporttaschen entnommen und in ein Versandbehältnis wie beispielsweise eine Tüte, einen Karton oder eine Kiste verpackt. Die geleerten Transporttaschen werden insbesondere über eine Rückführbahn der Hängeförderanlage rückgeführt und insbesondere an einer Aufgabeeinheit bereitgestellt, um neue Artikel in die leeren Transporttaschen aufzugeben und dem Artikellager zuzuführen.

Mit dem erfindungsgemäßen Verfahren wird eine zeitlich überlappende Verarbeitung mehrerer Auftragslisten ermöglicht. Insbesondere kann mit der Kommissionierung einer nachfolgenden Auftragsliste bereits begonnen werden, solange die vorherige Auftragsliste noch bearbeitet, insbesondere sortiert und/oder gepackt wird. Dadurch ist eine konstante Auslastung der Anlage zusätzlich verbessert. Insbesondere wurde erkannt, dass es nicht erforderlich ist, eine Auftragsliste erst vollständig abzuschließen, bevor die nächste Auftragsliste kommissioniert werden kann. Wesentlich ist hierbei der Auftragszwischenspeicher, in dem die Einzelartikel, die zu einem Auftrag kommissioniert worden sind, in einer Speicherbahn zwischengespeichert werden. Der Auftragszwischenspeicher ermöglicht die Überbrückung der Zeit für die Kommissionierung.

Bei dem erfindungsgemäßen Verfahren ist die Auslastung der Hängeförderanlage zusätzlich verbessert. Die Auslastung ist gleichmäßiger. Überraschend wurde gefunden, dass das Erstellen einer neuen Auftragsliste erst nach Ablauf eines Zeitintervalls erfolgt, das veränderlich festlegbar ist. Die neue Auftragsliste umfasst alle Einzelartikel von einem vollständigen Auftrag oder von mehreren vollständigen Aufträgen. Das Zeitintervall beginnt mit dem Erstellen der vorherigen Auftragsliste. Die Größe des Zeitintervalls ist abhängig von der Sortierleistung der Sortiereinheit. Zusätzlich kann die Größe des Zeitintervalls auch abhängig sein von der Anzahl der Einzelartikel pro Auftragsliste. Das Zeitintervall gibt einen, insbesondere festen, Takt vor, mit dem immer wieder neue Auftragslisten für die Kommissionierung erstellt werden. Das Verfahren ist kalkulierbar. Die Kommissionierung erfolgt konstant und regelmäßig. Das Zeitintervall definiert eine, insbesondere feste, Zeitscheibe. Die Dauer der Zeitscheibe entspricht der theoretischen Taktzeit der Sortierläufe. Bei einer Sortierleistung der Sortiereinheit von 7500 Transporttaschen pro Stunde und einer Maximalgröße von 216 Transporttaschen pro Auftragsliste ergibt sich eine Zeitscheibe von 1,728 min. In diesem konkreten Beispiel erstellt die Steuerungseinheit in einem Takt von 1,728 min eine neue Auftragsliste. In Abhängigkeit der Parameter der Hängeförderanlage, also insbesondere in Abhängigkeit der Sortierleistung der Sortiereinheit und der maximal zulässigen Anzahl von Transporttaschen pro Auftragsliste, kann die Zeitscheibe auch größer oder kleiner als 1,728 min festgelegt werden.

Insbesondere allokiert die Steuerungseinheit eine konkrete Speicherbahn des Auftragszwischenspeichers, in die die Einzelartikel des Auftrags eingelagert werden sollen. Insbesondere bildet die Steuerungseinheit immer nur eine einzige Auftragsliste für die nächste Aktivierung.

Dadurch, dass das Kommissionieren, insbesondere das Aktivieren, neuer Auftragslisten zeitgesteuert erfolgt, kann die Anzahl der erforderlichen Speicherbahnen in dem Auftragszwischenspeicher reduziert werden. Der Platzbedarf für die Hängeförderanlage ist reduziert. Der Kostenaufwand für Investition und Instandhaltung der Hängeförderanlage ist reduziert.

Ein Verfahren nach einem der Ansprüche 2 oder 3 garantiert einen störungsfreien Ablauf bei der Kommissionierung der Einzelartikel. Eine erforderliche Speicherkapazität ist insbesondere dann gegeben, wenn der Auftragszwischenspeicher und insbesondere die dafür vorgesehene Speicherbahn unbelegt ist, also keine Einzelartikel eines vorherigen Auftrags darin angeordnet sind. Die erforderliche Speicherkapazität ist dann gegeben, wenn der Auftragszwischenspeicher, insbesondere die dafür vorgesehene Speicherbahn, frei ist. Insbesondere wird vermieden, dass es zu einem Stau von Einzelartikeln entlang der Hängeförderanlage wegen Überlastung kommt.

Wenn der Zwischenspeicher nach Ablauf des Zeitintervalls nicht die erforderliche Speicherkapazität für die nächste Auftragsliste aufweist, weil insbesondere sämtliche Speicherbahnen noch mit vorherigen Aufträgen belegt sind, wird die Aktivierung der nächsten Auftragsliste vorrübergehend ausgesetzt. Das Aussetzen kann beispielsweise eine feste Zeitdauer, die veränderlich festlegbar ist, aufweisen. Insbesondere sind im Bereich des Ausgangs des Auftragszwischenspeichers, insbesondere an dem jeweiligen Ausgang der Speicherbahnen des Auftragszwischenspeichers, Identifikationseinheiten angeordnet sind, die geeignet sind, zu erfassen, wenn eine Speicherbahn und/oder der Auftragszwischenspeicher mit Einzelartikeln eines Auftrags geleert wird. In Abhängigkeit davon kann die Aktivierung der nächsten Auftragsliste erfolgen. Mit dieser Aktivierung wird das nächste Zeitintervall, also die Taktung für den weiteren Kommissionierprozess, in Gang gesetzt.

Ein Zwischenspeichern gemäß Anspruch 4 vereinfacht den nachfolgenden Sortierschritt. Dadurch, dass die Einzelartikel vereinzelt gefördert und vereinzelt identifizierbar sind, ist die auftragslistenreine Zwischenspeicherung in einer Speicherbahn vereinfacht. Insbesondere werden alle Einzelartikel der vollständigen Aufträge der Auftragsliste in die Speicherbahn gefördert und zwischengespeichert.

Ein Verfahren gemäß Anspruch 5 gewährleistet einen störungsfreien Ablauf, insbesondere beim Packen der Einzelartikel am Packplatz. Ein Packplatz kann eine Konfiguration derart aufweisen, dass von diesem Packplatz aus die gepackten Einzelwaren in einem bestimmen Bereich des Warenausgangs zum Versenden an einen bestimmten Kunden weitergefördert werden. Insbesondere kann der Packplatz einem oder mehreren bestimmten Kunden und/oder einem oder mehrere bestimmte Auslieferunternehmen, insbesondere Speditionen, zugeordnet sein. Ein Auftrag eines anderen Kunden kann an diesem Packplatz nicht gepackt werden, da dieser Auftrag nicht die zulässige Packplatzkonfiguration aufweist. Eine Packplatzkonfiguration kann sich auch daraus ergeben, dass nur bestimmte Einzelwaren, beispielsweise in Abhängigkeit deren Größe oder deren Gewicht, an einem Packplatz verpackt werden können.

Ein Verfahren gemäß Anspruch 6 ermöglicht eine Berücksichtigung höher priorisierter Aufträge. Dadurch ist es insbesondere möglich, Aufträge, die definitionsgemäß eine höhere Priorität aufweisen als andere Aufträge, vorrangig abzuarbeiten. Derart priorisierte Aufträge werden also insbesondere vor anderen Aufträgen, die bereits vorher in der Steuerungseinheit erfasst und hinterlegt worden sind, in die nächste Auftragsliste mit aufgenommen.

Ein Verfahren gemäß Anspruch 7 ermöglicht ein gleichmäßigeres Auslagern der Einzelartikel aus dem Artikellager. Insbesondere wird der Füllstand des Artikellagers beim Erstellen der Auftragsliste berücksichtigt. Dies kann beispielsweise dadurch erfolgen, dass bei der Zusammenstellung der Aufträge der Auftragsliste eine ausgeglichene, insbesondere im Wesentlichen gleichverteilte Entnahme der Einzelartikel aus dem Artikellager angestrebt wird. Dies ist beispielsweise dadurch möglich, dass die Einzelartikel im Wesentlichen gleichmäßig von verschiedenen Stellen des Artikellagers entnommen werden, insbesondere die gleiche Anzahl von Einzelartikeln je Untereinheit des Artikellagers. Eine Untereinheit des Artikellagers kann ein Umlaufkreisel sein.

Ein Verfahren gemäß Anspruch 8 gewährleistet einen störungsfreien Ablauf des Kommissionierens. Aufträge werden dann als zulässig deklariert, wenn sämtliche Einzelwaren des vollständigen Auftrags in dem Auftragszwischenspeicher, also insbesondere in dem dynamischen Speicher, vorhanden sind, wenn also der Auftrag mit den Einzelwaren aus dem dynamischen Speicher bedient werden kann.

Ein Verfahren gemäß Anspruch 9 ermöglicht einen gleichmäßigen Materialfluss in das und aus dem Artikellager. Das gleichzeitige Zuführen und Entnehmen von Einzelartikeln bedeutet, dass sich die Zeiträume für das Zuführen der Einzelartikel und für das Entnehmen der Einzelartikel zumindest bereichsweise überlappen. Eine Gleichzeitigkeit der Zeiträume bedeutet aber nicht, dass diese Zeiträume identisch überlappen müssen.

Eine Hängeförderanlage gemäß Anspruch 11 ist geeignet, das Kommissionierverfahren durchzuführen. Die Hängeförderanlage weist Förderschienen auf, entlang der Förderelemente, insbesondere Rolladapter, vereinzelt förderbar sind. Insbesondere werden die Rolladapter entlang der Hängeförderanlage angetrieben gefördert. Die Rolladapter ermöglichen den vereinzelten Transport von Transporttaschen, wobei insbesondere in jeder Transporttasche genau ein Einzelartikel angeordnet ist. Auf die Vorteile des Kommissionierverfahrens, die sich für die Hängeförderanlage ergeben, wird hiermit verwiesen.

Ein Artikellager gemäß Anspruch 12 vereinfacht die vereinzelte Entnahme von Einzelartikeln aus dem Artikellager und die vereinzelte Förderung der Einzelartikel.

Ein Artikellager gemäß Anspruch 13 gewährleistet die unkomplizierte Bereitstellung der Einzelartikel unabhängig vom Artikeltyp. Insbesondere ist es nicht erforderlich, dass die Einzelartikel in dem Artikellager artikelrein gelagert und entsprechend in den Auftragszwischenspeicher transferiert werden.

Ein Auftragszwischenspeicher gemäß Anspruch 14 ermöglicht eine effiziente Zwischenspeicherung mehrerer Einzelartikel, die zu einem Auftrag kommissioniert worden sind. Die Zwischenspeicherung in einer Speicherbahn ist unkompliziert und kosteneffektiv möglich. Der Auftragszwischenspeicher weist insbesondere mehrere Speicherbahnen auf.

Eine Hängeförderanlage gemäß Anspruch 15 ermöglicht die Überwachung der Belegung des Auftragszwischenspeichers, insbesondere einzelner Speicherbahnen des Auftragszwischenspeichers. Kapazitäten in dem Auftragszwischenspeicher werden unmittelbar erfasst. Die Identifikationseinrichtungen sind insbesondere mit der Speichereinheit in Signalverbindung, beispielsweise kabelgebunden oder kabellos, über eine Funk-Signalverbindung.

Sowohl die in den Patentansprüchen angegebenen Merkmale als auch die in den nachfolgenden Ausführungsbeispielen des erfindungsgemäßen Verfahrens und der Hängeförderanlage angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Darstellung einer erfindungsgemäßen Hängeförderanlage zum Kommissionieren von Einzelartikeln,
- Fig. 2: vergrößerte schematische Darstellung eines Artikellagers der Hängeförderanlage gemäß Fig. 1 und
- Fig. 3: eine vergrößerte schematische Darstellung eines Auftragszwischenspeichers mit fördertechnisch verbundener Sortiereinheit gemäß Fig. 1.

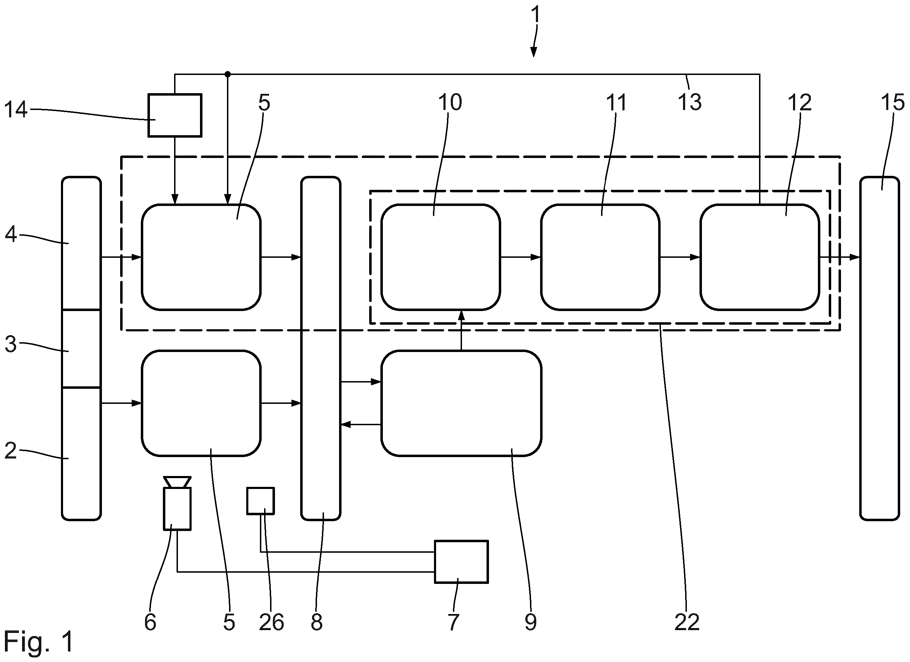

Eine in Fig. 1 bis 3 als Ganzes mit 1 bezeichnete Hängeförderanlage dient zum Transport von Hängeware, insbesondere von an Kleiderbügeln aufgehängten Bekleidungsstücken und/oder zum Transport von Transporttaschen, die zur Aufnahme eines Einzelartikels geeignet sind. Die Kleiderbügel und/oder die Transporttaschen werden entlang eines Schienensystems mittels Rolladaptern gefördert. Der Rolladapter weist insbesondere eine Einhängeöffnung auf, in die der Kleiderbügel und/oder die Transporttasche eingehängt werden kann. Eine derartige Hängeförderanlage mit Rolladaptern ist aus EP 1 690 811 A1 bekannt, worauf hiermit bezüglich der Details des Rolladapters und der Hängeförderanlage verwiesen wird.

Die Hängeförderanlage 1 weist ein Zentrallager 2 auf, in dem eine Vielzahl von Artikeln, nicht notwendigerweise Einzelartikel, langfristig, insbesondere über mehrere Tage, Wochen, Monate oder Jahre hinweg, eingelagert sein können. Die Hängeförderanlage 1 weist ferner einen Wareneingang 3 auf zur Annahme neuer Waren, die beispielsweise im Zentrallager 2 eingelagert und/oder in der Hängeförderanlage 1 weitergefördert werden können.

Die Hängeförderanlage 1 weist ferner einen Retourenwareneingang 4 auf zur Aufnahme von Retourewaren, also Artikelrücksendungen, auf. Das Zentrallager 2, der Wareneingang 3 und der Retourenwareneingang 4 bilden jeweils für sich genommen oder in Kombination miteinander Warenquellen.

Mit den Warenquellen 2, 3, 4 sind mehrere Aufgabeeinheiten 5 fördertechnisch verbunden. Insbesondere ist mindestens eine Aufgabeeinheit 5 vorgesehen. Die fördertechnische Verbindung zwischen den Warenquellen 2, 3, 4 und den Aufgabeeinheiten 5 ist insbesondere nicht als Hängefördersystem, sondern in Form von Bandförderern und/oder autonomen Förderfahrzeugen ausgeführt.

Die Hängeförderanlage 1 weist insbesondere mehrere Aufgabeeinheiten 5 auf. Das Beladen der leeren Transporttaschen an den Aufgabeeinheiten 5 kann automatisiert und/oder manuell durch Bedienpersonen erfolgen.

In den Aufgabeeinheiten 5 erfolgt jeweils die Vereinzelung der Waren. Einzelartikel werden in leere Transporttaschen, die an der Aufgabeeinheit 5 bereitgestellt werden, beladen. Insbesondere weisen die Einzelartikel jeweils einen eindeutigen Identifikationscode, beispielsweise einen Barcode, auf, der mittels einer Leseeinheit 6, die im Bereich der Aufgabeeinheit 5 angeordnet ist, gelesen wird. Die Leseeinheit 6 ist mit einer Steuerungseinheit 7 signaltechnisch verbunden. Gemäß der Figur ist eine kabelgebundene Signalübertragung zwischen der Leseeinheit 6 und der Steuerungseinheit 7 vorgesehen. Die Signalübertragung kann auch kabellos erfolgen.

Die Aufgabeeinheiten 5 sind mit einer zentralen Fördertechnik 8 mit einem Artikellager 9 fördertechnisch verbunden. Das Artikellager 9 ist geeignet, die in den Transporttaschen angeordneten Einzelwaren zu lagern. Das Artikellager 9 ermöglicht die Lagerung der Transporttaschen. Das Artikellager 9 ist ein Taschenlager und wird auch als Bagstore bezeichnet.

Das Artikellager 9 ist fördertechnisch gemäß dem gezeigten Ausführungsbeispiel mit einem Auftragszwischenspeicher 10 verbunden, der als Runbuffer bezeichnet wird. Um die Kapazität der Hängeförderanlage 1 zu erhöhen, kann das Artikellager 9 auch mit mehreren, insbesondere mit m Auftragszwischenspeichern 10 verbunden sein, wobei insbesondere m ≥ 2, insbesondere m ≥ 5, insbesondere m ≥ 10, insbesondere m ≥ 20, insbesondere m ≥ 50, insbesondere m ≥ 100 und insbesondere m ≤ 1000.

Der Auftragszwischenspeicher 10 ist fördertechnisch mit einer Sortiereinheit 11 in Form eines Matrixsorters verbunden.

Die Sortiereinheit 11 ist fördertechnisch mit mindestens einem Packplatz 12 verbunden.

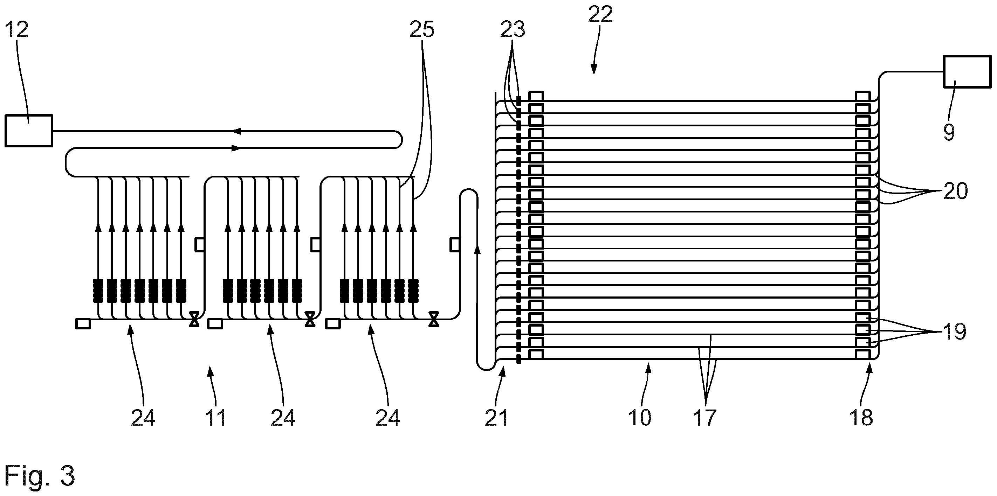

Der Auftragszwischenspeicher 10, die Sortiereinheit 11 und der Packplatz 12 bilden ein sogenanntes Sortier-Modul 22, das in Fig. 3 dargestellt ist. Es ist insbesondere denkbar, dass mehrere, insbesondere m Sortier-Module 22, in der Hängeförderanlage 1 vorgesehen sind. Gemäß dem gezeigten Ausführungsbeispiel ist jedem Sortier-Modul 22 ein eigener Packplatz 12 zugeordnet. Es ist alternativ denkbar, dass die Sortier-Module lediglich jeweils einen Zwischenspeicher 10 und eine Sortiereinheit 11 aufweisen und die Sortier-Module 22 jeweils mit einem oder mehreren Packplätzen 12 verbunden sind. Insbesondere ist denkbar, dass eine flexible Zuordnung der Sortier-Module 22 zu den Packplätzen 12 erfolgt.

An dem Packplatz 12 werden die Einzelartikel aus den Transporttaschen entnommen und für den Transport an einen Kunden verpackt. Die am Packplatz 12 entleerten Transporttaschen können über eine Rückführstrecke 13 zurückgeführt und den Aufgabeeinheiten 5 oder einem LeertaschenSpeicher 14 zur Verfügung gestellt werden. Die zu beladenden Leertaschen können der Aufgabeeinheit 5 aus dem Leertaschenspeicher 14 bereitgestellt werden.

Die verpackten Einzelwaren werden von dem Packplatz 12 an einem Warenausgang 15 bereitgestellt. Alternativ, insbesondere falls eine Warenauslieferung nicht möglich sein sollte, können die verpackten Waren im Bereich des Warenausgangs in einem geeigneten Zwischenlager zwischengelagert oder über eine der Warenquellen 2, 3, 4 der Hängeförderanlage 1 wieder zugeführt werden.

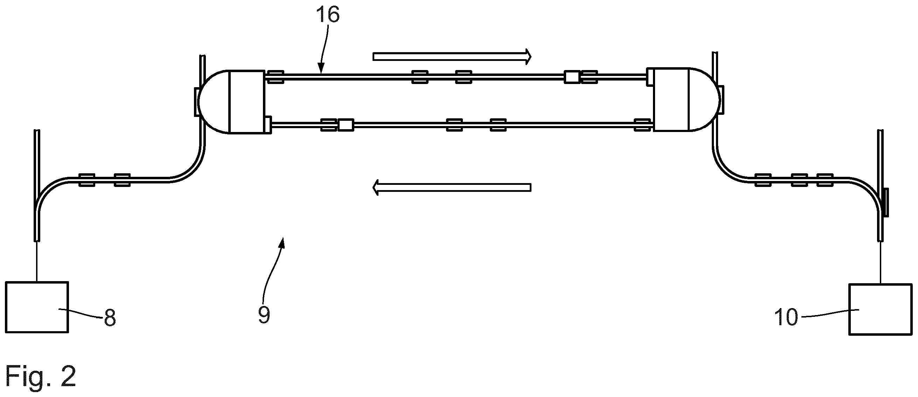

Nachfolgend wird anhand von Fig. 2 das Artikellager 9 näher erläutert. Gemäß Fig. 2 weist das Artikellager 9 einen Umlaufkreisel 16 auf. Entlang des Umlaufkreisels 16 können die Einzelwaren, die aus der Aufgabeeinheit 5 über die zentrale Fördertechnik 8 zugeführt werden, mit hoher Dichte flexibel ein- und ausgelagert werden. Das Artikellager 9 kann in beliebiger Reihenfolge mit den Einzelwaren aus der Aufgabeeinheit 5 befüllt werden. Insbesondere ist es für den weiteren Kommissionierprozess in der Hängeförderanlage 1 unerheblich, ob die zugeführten Einzelwaren vorsortiert sind.

In dem Artikellager 9 sind die Einzelwaren einzeln und automatisch abrufbar. Insbesondere besteht wahlfreier Zugriff auf jedes Einzelteil. Das Artikellager 9 ist ein automatisches Lager und ein automatisches Picksystem. Die Befüllung des Artikellagers 9 erfolgt nach Füllstand. Insbesondere ermöglicht das Artikellager 9 ein gleichzeitiges Ein- und Auslagern. Insbesondere ist es möglich, mehrere Umlaufkreisel 16 parallel anzustoßen. Der Zugriff auf Einzelartikel, insbesondere die Auslagerung der Einzelartikel aus den Umlaufkreiseln 16 des Artikellagers 9, ist verbessert. Das Artikellager 9 ist ein Speicher mit direktem Einzelartikelzugriff.

Nachfolgend werden anhand von Fig. 3 der Auftragszwischenspeicher 10 und die Sortiereinheit 11 näher erläutert.

Der Auftragszwischenspeicher 10 weist gemäß dem gezeigten Ausführungsbeispiel zweiundzwanzig Speicherbahnen 17 auf. Es versteht sich, dass auch mehr oder weniger Speicherbahnen 17 vorgesehen sein können. Die Speicherbahnen 17 sind voneinander unabhängig ausgeführte Speicher, die nach dem First-In-First-Out-Prinzip arbeiten. In einem Eingangsbereich 18 der Speicherbahnen 17 ist jeweils eine Identifikationseinheit 19 angeordnet.

Eine von dem Artikellager 9 kommende Zuführstrecke ist jeweils über eine Weiche 20 mit einer der Speicherbahnen 17 koppelbar. Die Speicherbahnen 17 sind parallel zueinander orientiert. Die Speicherbahnen 17 weisen jeweils einen dem Eingangsbereich 18 gegenüberliegenden Ausgangsbereich 21 auf. In dem jeweiligen Ausgangsbereich 21 ist eine Stoppervorrichtung 23 vorgesehen, die das Stoppen bzw. Aufstauen der Einzelartikel entlang einer Speicherbahn 17 gewährleistet.

Über eine Abführstrecke sind die Speicherbahnen 17 in deren jeweiligem Ausgangsbereich 21 fördertechnisch mit der stromabwärts angeordneten Sortiereinheit 11 gekoppelt. Die Sortiereinheit 11 ist als mehrstufiger Matrixsorter ausgeführt und weist drei in Förderrichtung hintereinander angeordnet Sortermodule 24 auf. Die Sortermodule 24 weisen jeweils sieben parallele Sorterbahnen 25 auf. Mehrstufige Matrixsorter sind aus dem Stand der Technik bekannt.

Der Auftragszwischenspeicher 10 ist insbesondere so dimensioniert, dass er mindestens vierundzwanzig Auftragslisten aufnehmen kann. Die Anzahl ergibt sich aus der Taktzeit der Auftragslisten in der Sortiereinheit, nämlich 1,728 min. Die Anzahl ergibt sich auch aus der Zeit, die zum Sammeln aller Einzelteile einer Artikelliste auf einer Speicherbahn 17 erforderlich ist, nämlich etwa 35 min. Die Zeit zum Sammeln der Einzelartikel setzt sich aus der Umschlagzeit eines Pickspeichers von etwa 20 min und der Transportzeit vom Pickspeicher zu dem Auftragszwischenspeicher 10 min von bis zu 15 min zusammen. Für die reine Zwischenspeicherung, also Pufferung, sind mindestens einundzwanzig Speicherbahnen 17 erforderlich sowie eine weitere Speicherbahn 17, die immer aktuell ausgelagert wird.

Nachfolgend wird anhand der Fig. 1 bis 3 ein Verfahren zum Kommissionieren von Einzelartikeln in der Hängeförderanlage 1 näher erläutert.

Einzelartikel aus einer der Warenquellen 2, 3, 4 werden zu einem der Aufgabeeinheiten 5 transportiert. Die Einzelartikel aus dem Retourenwareneingang 4 können vorteilhafterweise unmittelbar in das Artikellager 9 gefördert werden. Dies kann mittels autonomen Transportfahrzeugen, manuell oder mittels einer beliebigen Fördertechnik erfolgen. Der Transport der Waren von den Warenquellen 2, 3, 4 zu den Aufgabeeinheiten 5 ist in einfacher Weise möglich. Insbesondere ist es nicht erforderlich, dass einzelne Artikel transportiert werden. Es ist insbesondere denkbar, dass Gebinde, die mehrere Artikel umfassen, zu den Aufgabeeinheiten 5 transportiert werden.

An den Aufgabeeinheiten 5 werden die Einzelartikel vereinzelt in bereitgestellte Transporttaschen geladen. Dies kann manuell oder mittels einer dafür vorgesehenen Beladestation erfolgen, die beispielsweise aus der EP 2 196 415 B1 bekannt ist und worauf hiermit ausdrücklich verwiesen wird.

An jeder Aufgabeeinheit 5 ist eine Leseeinheit 6 angeordnet, um einen Identifikationscode des Einzelartikels zu erfassen und mit einem Identifikationscode der Transporttasche datentechnisch zu verknüpfen. Dazu ist auch eine Identifikationseinheit 26 an der Aufgabeeinheit 5 angeordnet, um den Identifikationscode der Transporttasche zu erfassen. Die Leseeinheit 6 und die Identifikationseinheit 26 sind datentechnisch mit der Steuerungseinheit 7 verbunden. In der Steuerungseinheit 7 werden die Identifikationsdaten von Einzelware und Transporttasche "verheiratet".

In der Steuerungseinheit 7 ist eine Materialflusssoftware gespeichert, die zur Ausführung eines sogenannten Warehouse Control Systems geeignet ist. In dem Warehouse Control System werden Kundenaufträge abgearbeitet, indem mindestens ein vollständiger Auftrag, insbesondere mehrere vollständige Aufträge, zu einer Auftragsliste zusammengestellt werden. Die Auftragsliste umfasst mehrere Einzelartikel, wobei insbesondere eine Maximalzahl von Einzelartikeln nicht überschritten werden darf. Die maximal zulässige Anzahl von Einzelartikeln gemäß dem gezeigten Ausführungsbeispiel beträgt 216.

Die von dem Materialflusssystem übergebenen Aufträge werden zu der Auftragsliste zusammengestellt. Dabei können optionale Kriterien berücksichtigt werden wie beispielsweise die Tatsache, dass nur Aufträge berücksichtigt werden, die als zulässig gemeldet wurden, dass nur Aufträge verwendet werden, die der aktuellen Packplatzkonfiguration aktiver Packstationen entsprechen, dass Aufträge mit hoher Priorität bevorzugt abgearbeitet werden und dass die Auftragslisten mit dem Ziel einer ausgeglichenen Picklistenbildung über alle Auftragszwischenspeicher hinweg gebildet werden.

Die in der Aufgabeeinheit 5 beladenen Transporttaschen werden über die zentrale Fördertechnik 8 dem Artikellager 9 zugeführt.

Die Einlagerung der Transporttaschen in das Artikellager erfolgt quasi chaotisch. Insbesondere ist es nicht erforderlich, dass die Artikel von den Aufgabeeinheiten 5 in das Artikellager 9 artikelrein transferiert werden. In dem Artikellager 9, das mehrere Umlaufkreisel 16 aufweist, gibt es keine präferierte Zuordnung der Einzelartikel zu Umlaufkreiseln. Beispielsweise kann eine ausgeglichene, gleichmäßige Verteilung der Einzelartikel auf die Umlaufkreisel 16 erfolgen.

Mit der Aktivierung der Auftragsliste gesteuert von der Steuerungseinheit 7 beginnt die Auslagerung der Einzelartikel aus dem Artikellager 9 in den Auftragszwischenspeicher 10. Vorteilhaft ist, dass die Artikel vereinzelt und flexibel in dem Umlaufkreiseln 16 des Artikellagers 9 gespeichert sind. Dadurch ist ein unmittelbarer, flexibler Zugriff auf Einzelartikel möglich, insbesondere unabhängig von der Reihenfolge der Befüllung der Umlaufkreisel 16 mit den Einzelartikeln.

Die Einzelartikel werden auftragslistenrein, aber unsortiert bezüglich ihrer Reihenfolge, in den Speicherbahnen 17 des Auftragszwischenspeichers 10 zwischengespeichert, insbesondere so lange bis alle Einzelartikel eines Auftrags oder mehrerer Aufträge in einer Speicherbahn 17 angeordnet sind. Sobald sämtliche Artikel des Auftrags oder aller Aufträge vollständig in der Speicherbahn 17 angeordnet sind, werden die Einzelartikel des komplettierten Auftrags oder der kompletten Aufträge aus dem Auftragszwischenspeicher 10 in die Sortiereinheit 11 transportiert und dort in die richtige Reihenfolge sortiert. Die richtige Reihenfolge ist dann gegeben, wenn die Einzelartikel für jeden komplettierten Auftrag hintereinander in der Sortiereinheit 11 angeordnet sind. Die einzelnen Aufträge können dann aus der Sortiereinheit 11 auftragsorientiert ausgeschleust werden.

Die in der richtigen Sortierreihenfolge angeordneten Artikel der Aufträge werden von der Sortiereinheit 11 auftragsorientiert an die Packplätze 12 transportiert. An den Packplätzen 12 erfolgt die Entladung, also die Entnahme der Einzelwaren aus den Transporttaschen. Die Einzelwaren werden verpackt und an den Warenausgang 15 transportiert. Die geleerten Transporttaschen werden über die Rückführlinie 13 direkt den Aufgabeeinheiten 5 oder über einen Leertaschenspeicher 14 den Aufgabeeinheiten 15 zur erneuten Beladung zur Verfügung gestellt.

Sämtliche Transportwege der Transporttasche innerhalb der Hängeförderanlage 1 sind über Identifikationseinheiten entlang des Transportweges individuell nachvollziehbar. Identifikationseinheiten sind insbesondere jeweils am Beginn und am Ende entlang einer Transportrichtung für jede Einheit, also insbesondere die Aufgabeeinheit 5, das Artikellager 9, den Auftragszwischenspeicher 10, insbesondere den Speicherbahnen 17, der Sortiereinheit 11, insbesondere den Sortermodulen 24 und den Sorterbahnen 25, sowie den Packplätzen 12 vorgesehen.

Mit der Aktivierung der Auftragsliste wird ein Zeitintervall gestartet, das insbesondere veränderlich festlegbar ist. Gemäß dem gezeigten Ausführungsbeispiel beträgt das Zeitintervall 103,7 s oder 1,728 min. Die Größe des Zeitintervalls, das auch als Zeitscheibe bezeichnet wird, ergibt sich aus der Sortierleistung der Sortiereinheit, die gemäß dem gezeigten Ausführungsbeispiel 7500 Einzelartikel je Stunde aufweist, und der maximal zulässigen Größe einer Auftragsliste von n Aufträgen mit bis zu 216 Einzelartikeln. Ein Sortierlauf wird als Run bezeichnet.

Nach Ablauf des Zeitintervalls wird, insbesondere automatisch, eine neue Auftragsliste erstellt und aktiviert und abgearbeitet, also aus dem Artikellager 9 ausgelagert, im Auftragszwischenspeicher 10 zwischengespeichert, in der Sortiereinheit 11 sortiert, an den Packplätzen 12 gepackt und ausgeliefert.

Wenn zu Beginn einer neuen Zeitscheibe, also nach Ablauf des Zeitintervalls, sämtliche Speicherbahnen 17 des Auftragszwischenspeichers 10 belegt ist, wird die Aktivierung der neuen Auftragsliste zurückgestellt. Insbesondere wird die Aktivierung so lange zurückgestellt, bis der Steuerungseinheit 7 ein Freigabesignal übermittelt wird, aus dem Auftragszwischenspeicher, dass eine Speicherbahn 17 frei ist.

Durch das Verfahren kann die Anzahl der verwendeten Speicherbahnen 17 reduziert und die Auslastung der Fördertechnik in dem Artikellager 9 optimiert werden.

Besonders vorteilhaft ist es, wenn ständig ausreichend Auftragslisten erstellt und an die Steuerungseinheit 7 übertragen werden. Dadurch kann eine höhere Leistung, also Durchsatzrate von Einzelartikeln, erzielt werden. Die Wirtschaftlichkeit der Hängeförderanlage 1 ist erhöht.

Es ist insbesondere möglich, dass direkt nach dem Erstellen einer Auftragsliste eine oder mehrere Speicherbahnen 17 des Auftragszwischenspeichers 10 für einen oder mehrere Aufträge der Auftragsliste reserviert werden, ohne dass es auf die Aktivierung dieses Runs in der nächsten Zeitscheibe ankommt. Dies ist insbesondere dann vorteilhaft, wenn die betreffende Auftragsliste einen oder mehrere Express-Aufträge, also Aufträge mit erhöhter Priorität, aufweist. Express-Aufträge können Auftragspositionen, also Einzelartikel, aufweisen, die nicht aus dem Artikellager 9, sondern von den Aufgabeeinheiten 5 direkt dem Auftragszwischenspeicher, insbesondere die reservierte Speicherbahn 17, zugeführt werden.

Als besonders vorteilhaft wurde erkannt, dass eine konstante Auslastung der Hängeförderanlage 1 dadurch möglich ist, dass die Auftragslisten in einer Phase der Kommissionierung nicht vollständig abgeschlossen sein müssen, bevor eine neue Auftragsliste erstellt wird und in diese Phase tritt. Eine zeitlich überlappende Verarbeitung von Auftragslisten ist möglich. Dies wird insbesondere durch den Auftragszwischenspeicher 10 mit den Speicherbahnen 17 erreicht, indem die kommissionierten Einzelartikel einer Auftragsliste gepuffert werden. Der Auftragszwischenspeicher 10 überbrückt die Zeit der Kommissionierung.

Jeder Run der Auftragsliste belegt immer genau eine Speicherbahn 17 des Auftragszwischenspeichers 10. Jeder Auftrag umfasst bis zu 216 Einzelartikel. Dies entspricht der Anzahl an Einzelartikeln, die im Matrixsorter in einem Sortierlauf verarbeitet werden können. Der Auftragszwischenspeicher 10 besteht aus sechsundzwanzig Speicherbahnen 17 und kann somit insgesamt bis zu 5616 Einzelartikel aufnehmen.

In einem eingeschwungenen Zustand des Verfahrens sind vierundzwanzig Speicherbahnen 17 des Auftragszwischenspeichers 10 belegt. Alle 1,728 min wird ein Auftrag abgearbeitet, also ausgelagert und in die Sortiereinheit 11 abgezogen. Entsprechend muss alle 1,718 min eine neue Auftragsliste alloziert werden.

Die Zuordnung der Aufträge auf die Speicherbahnen 17 wird während der Erstellung der Auftragsliste festgelegt. Bei der Verarbeitung der Auftragsliste in der Steuerungseinheit 7 werden den Aufträgen die physikalischen Speicherbahnen 17 zugeordnet. Auf die jeweiligen Speicherbahnen 17 werden Einzelartikel eingelagert, die aus den Aufgabeeinheiten 5 direkt oder aus dem Artikellager 9 stammen und dort automatisch gepickt worden sind, wenn diese Einzelartikel dem jeweiligen Auftrag der Speicherbahnen 17 zugeordnet werden können. Die Einzelartikel werden anhand der zugeordneten Aufträge in die entsprechenden Speicherbahnen 17 eingelagert. Jede Einlagerung wird der Steuerungseinheit 7 gemeldet.

Die Steuerungseinheit 7, insbesondere die Materialflusssoftware, gibt vor, wann ein Auftrag von einer Speicherbahn 17 zur Sortiereinheit 11 hin abgezogen wird. Vorteilhaft ist es, wenn die Materialflusssoftware den Auftrag abzieht, sobald alle Teile des Auftrags auf der Speicherbahn 17 abgeworfen worden sind. Die Steuerungseinheit 7 kontrolliert nach Erhalt der Abzugsanforderung, ob ausreichend Speicherkapazität in der Sortiereinheit 11 vorhanden ist. Sind mehrere Aufträge gleichzeitig zum Abzug freigegeben, zieht die Materialflusssoftware Aufträge automatisch in der Reihenfolge der Freigabe durch die Materialflusssoftware ab. Eine Speicherbahn 17 kann bei Bedarf auch manuell durch einen Supervisor abgezogen werden, insbesondere auch dann, wenn dieser noch unvollständige Aufträge enthält.

## Patentansprüche

1. Verfahren zum Kommissionieren von Einzelartikeln mit den Verfahrensschritten
- Erstellen einer mehrere Einzelartikel umfassenden Auftragsliste mittels einer Steuerungseinheit (7), wobei die Auftragsliste mindestens einen Auftrag aufweist,
- Fördern der Einzelartikel der Auftragsliste aus einem Artikellager (9) in einen Auftragszwischenspeicher (10),
- Zwischenspeichern der Einzelartikel in dem Auftragszwischenspeicher (10),
- Fördern der Einzelartikel der Auftragsliste aus dem Auftragszwischenspeicher (10) in eine Sortiereinheit (11),
- Kommissionieren der Einzelartikel zu dem mindestens einen Auftrag der Auftragsliste mittels der Sortiereinheit (11),
- Fördern der zu einem Auftrag kommissionierten Einzelartikel von der Sortiereinheit (11) zu einem Packplatz (12),
**gekennzeichnet durch** das Erstellen einer neuen Auftragsliste nach Ablauf eines Zeitintervalls, das veränderlich festlegbar ist, wobei das Zeitintervall mit dem Erstellen der vorherigen Auftragsliste beginnt und wobei die Größe des Zeitintervalls abhängig ist von der Sortierleistung der Sortiereinheit (11).

2. Verfahren gemäß Anspruch 1, **dadurch gekennzeichnet, dass** nach Ablauf eines Zeitintervalls geprüft wird, ob der Auftragszwischenspeicher (10) eine für die Zwischenspeicherung der Einzelartikel der neuen Auftragsliste erforderliche Speicherkapazität aufweist.

3. Verfahren gemäß Anspruch 2, **dadurch gekennzeichnet, dass** das Fördern der Einzelartikel der neuen Auftragsliste aus dem Artikellager (9) erst dann beginnt, wenn der Auftragszwischenspeicher (10) die erforderliche Speicherkapazität aufweist.

4. Verfahren gemäß einem der vorstehenden Ansprüche, **dadurch gekennzeichnet, dass** das Zwischenspeichern der Einzelartikel in jeweils einer Speicherbahn (17) des Auftragszwischenspeichers (10) auftragslistenrein erfolgt.

5. Verfahren gemäß einem der vorstehenden Ansprüche, **dadurch gekennzeichnet, dass** bei der Erstellung einer Auftragsliste nur Aufträge berücksichtigt werden, die einer zulässigen Packplatzkonfiguration des Packplatzes (12) entsprechen.

6. Verfahren gemäß einem der vorstehenden Ansprüche, **dadurch gekennzeichnet, dass** bei der Erstellung einer Auftragsliste Aufträge höherer Priorität bevorzugt berücksichtigt werden.

7. Verfahren gemäß einem der vorstehenden Ansprüche, **dadurch gekennzeichnet, dass** bei der Erstellung einer Auftragsliste die Aufträge so ausgewählt werden, dass ein ausgeglichenes Fördern der Einzelartikel aus dem Artikellager (9) erfolgt.

8. Verfahren gemäß einem der vorstehenden Ansprüche, **dadurch gekennzeichnet, dass** bei der Erstellung einer Auftragsliste nur als zulässig deklarierte Aufträge berücksichtigt werden.

9. Verfahren gemäß einem der vorstehenden Ansprüche, **gekennzeichnet durch** ein gleichzeitiges Zuführen von Einzelartikeln in das Artikellager (9) und Entnehmen von Einzelartikeln aus dem Artikellager (9).

10. Verfahren gemäß einem der vorstehenden Ansprüche, **dadurch gekennzeichnet, dass** sich eine theoretische Taktzeit eines Sortierlaufs ergibt aus dem Quotienten einer maximal zulässigen Anzahl von Transporttaschen zu einer Sortierleistung der Sortiereinheit (11).

11. Hängeförderanlage zum Durchführen eines Verfahrens gemäß einem der vorstehenden Ansprüche mit
- einem Artikellager (9), in dem Einzelartikel einzeln gelagert sind,
- einem Auftragszwischenspeicher (10) zum Zwischenspeichern der Einzelartikel eines Auftrags, wobei der Auftragszwischenspeicher (10) mit dem Artikellager (9) fördertechnisch verbunden ist,
- einer Sortiereinheit (11) zum Sortieren der Einzelartikel eines Auftrags, wobei die Sortiereinheit (11) mit dem Auftragszwischenspeicher (10) fördertechnisch verbunden ist,
- einem Packplatz (12) zum Packen der Einzelartikel des kommissionierten Auftrags, wobei der Packplatz (12) mit der Sortiereinheit (11) fördertechnisch verbunden ist,
**gekennzeichnet durch**
- eine Steuerungseinheit (7), die dazu ausgeführt ist, eine mehrere Einzelartikel umfassende Auftragsliste, die mindestens einen Auftrag aufweist, zu erstellen, wobei das Erstellen einer neuen Auftragsliste nach Ablauf eines Zeitintervalls, das veränderlich festlegbar ist, wobei das Zeitintervall mit dem Erstellen der vorherigen Auftragsliste beginnt und wobei die Größe des Zeitintervalls abhängig ist von der Sortierleistung der Sortiereinheit (11).

12. Hängeförderanlage gemäß Anspruch 11, **dadurch gekennzeichnet, dass** das Artikellager (9) als Taschenlager ausgeführt ist.

13. Hängeförderanlage gemäß Anspruch 11 oder 12, **dadurch gekennzeichnet, dass** das Artikellager (9) mindestens einen Umlaufkreisel (16) aufweist.

14. Hängeförderanlage gemäß einem der Ansprüche 11 bis 13, **dadurch gekennzeichnet, dass** der Auftragszwischenspeicher (10) mindestens eine Speicherbahn (17) aufweist.

15. Hängeförderanlage gemäß einem der Ansprüche 11 bis 14, **dadurch gekennzeichnet, dass** mindestens eine Identifikationseinheit (19, 26) zum Identifizieren der Einzelartikel, insbesondere zum Identifizieren von Transporttaschen für den Transport der Einzelartikel, vorgesehen ist, wobei die mindestens eine Identifikationseinheit (19, 26) mit der Steuerungseinheit (7) in Signalverbindung für die Steuerung des Transportpfades der Einzelware in der Hängeförderanlage (1) steht.

## Claims

1. Method for picking individual items having the method steps of
- creating an order list comprising a plurality of individual items by means of a control unit (7), wherein the order list has at least one order,
- conveying the individual items in the order list from an item store (9) to an order interim storage (10),
- temporarily storing the individual items in the order interim storage (10),
- conveying the individual items in the order list from the order interim storage (10) to a sorting unit (11),
- picking the individual items for the at least one order in the order list by means of the sorting unit (11),
- conveying the individual items picked for an order from the sorting unit (11) to a packing station (12),
**characterised by**
creating a new order list after a time interval has elapsed, which can be varied, wherein the time interval starts when the previous order list is created and wherein the size of the time interval depends on the sorting capacity of the sorting unit (11).

2. Method according to claim 1, **characterised in that** after a time interval has elapsed, a check is performed to see whether the order interim storage (10) has a storage capacity required for the temporary storage of the individual items in the new order list.

3. Method according to claim 2, **characterised in that** the individual items in the new order list only start to be conveyed from the item store (9) if the order interim storage (10) has the required storage capacity.

4. Method according to one of the preceding claims, **characterised in that** the individual items are temporarily stored in a respective storage track (17) of the order interim storage (10) in accordance with the order list.

5. Method according to one of the preceding claims, **characterised in that** when an order list is created, orders are only considered that correspond to a permitted packing station configuration of the packing station (12).

6. Method according to one of the preceding claims, **characterised in that** when an order list is created, orders with a higher priority are considered first.

7. Method according to one of the preceding claims, **characterised in that** when an order list is created, the orders are selected such that the individual items are conveyed from the item store (9) in a balanced manner.

8. Method according to one of the preceding claims, **characterised in that** when an order list is created, only orders declared as permissible are considered.

9. Method according to one of the preceding claims, **characterised by** simultaneous feeding of individual items into the item store (9) and removal of individual items from the item store (9).

10. Method according to one of the preceding claims, **characterised in that** a theoretical cycle time of a sorting run results from the ratio of a maximum permitted number of transport bags to a sorting capacity of the sorting unit (11).

11. Suspension conveyor system for carrying out a method according to one of the preceding claims having
- an item store (9), in which individual items are individually stored,
- an order interim storage (10) for temporarily storing the individual items in an order, wherein the order interim storage (10) is connected to the item store (9) via conveyor technology,
- a sorting unit (11) for sorting the individual items in an order, wherein the sorting unit (11) is connected to the order interim storage (10) via conveyor technology,
- a packing station (12) for packing the individual items of the picked order, wherein the packing station (12) is connected to the sorting unit (11) via conveyor technology,
**characterised by**
- a control unit (7), which is designed to create an order list comprising a plurality of individual items which has at least one order, wherein the creation of a new order list is provided after a time interval has elapsed, which can be varied, wherein the time interval starts when the previous order list is created and wherein the size of the time interval depends on the sorting capacity of the sorting unit (11).

12. Suspension conveyor system according to claim 11, **characterised in that** the item store (9) is designed as a bag store.

13. Suspension conveyor system according to claim 11 or 12, **characterised in that** the item store (9) has at least one rotary carousel (16).

14. Suspension conveyor system according to one of claims 11 to 13, **characterised in that** the order interim storage (10) has at least one storage track (17).

15. Suspension conveyor system according to one of claims 11 to 14, **characterised in that** at least one identification unit (19, 26) is provided for identifying the individual items, in particular for identifying transport bags for the transport of the individual items, wherein the at least one identification unit (19, 26) is in signal communication with the control unit (7) for the control of the transport path of the individual goods in the suspension conveyor system (1).

## Revendications

1. Procédé de préparation de commandes d'articles individuels comportant les étapes de procédé consistant à
- créer une liste de commandes comprenant plusieurs articles individuels au moyen d'une unité de commande (7), la liste de commandes présentant au moins une commande,
- transporter les articles individuels de la liste de commandes d'un entrepôt d'articles (9) à un magasin intermédiaire de commandes (10),
- stocker de manière intermédiaire les articles individuels dans le magasin intermédiaire de commandes (10),
- transporter les articles individuels de la liste de commandes du magasin intermédiaire de commandes (10) à une unité de tri (11),
- préparer les commandes des articles individuels pour obtenir l'au moins une commande de la liste de commandes au moyen de l'unité de tri (11),
- transporter les articles individuels préparés pour obtenir une commande de l'unité de tri (11) à un poste d'emballage (12),
**caractérisé par**
la création d'une nouvelle liste de commandes après l'écoulement d'un intervalle de temps qui peut être défini de manière variable, l'intervalle de temps commençant à la création de la liste de commandes précédente et la grandeur de l'intervalle de temps étant dépendante de la performance de tri de l'unité de tri (11).

2. Procédé selon la revendication 1, **caractérisé en ce que,** après l'écoulement d'un intervalle de temps, il est vérifié si le magasin intermédiaire de commandes (10) présente une capacité de stockage nécessaire pour le stockage intermédiaire des articles individuels de la nouvelle liste de commandes.

3. Procédé selon la revendication 2, **caractérisé en ce que** le transport des articles individuels de la nouvelle liste de commandes depuis l'entrepôt d'articles (9) ne commence que quand le magasin intermédiaire de commandes (10) présente la capacité de stockage nécessaire.

4. Procédé selon l'une des revendications précédentes, **caractérisé en ce que** le stockage intermédiaire des articles individuels est effectué respectivement pour une unique liste de commandes dans une voie de stockage (17) du magasin intermédiaire de commandes (10).

5. Procédé selon l'une des revendications précédentes, **caractérisé en ce que,** lors de la création d'une liste de commandes, seules les commandes qui correspondent à une configuration de poste d'emballage autorisée pour le poste d'emballage (12) sont prises en compte.

6. Procédé selon l'une des revendications précédentes, **caractérisé en ce que,** lors de la création d'une liste de commandes, des commandes d'une priorité plus élevée sont prises en compte prioritairement.

7. Procédé selon l'une des revendications précédentes, **caractérisé en ce que,** lors de la création d'une liste de commandes, les commandes sont sélectionnées de telle manière qu'un transport équilibré des articles individuels depuis l'entrepôt d'articles (9) est effectué.

8. Procédé selon l'une des revendications précédentes, **caractérisé en ce que,** lors de la création d'une liste de commandes, seules les commandes déclarées comme autorisées sont prises en compte.

9. Procédé selon l'une des revendications précédentes, **caractérisé par** une mise en œuvre simultanée de l'acheminement d'articles individuels dans l'entrepôt d'articles (9) et du prélèvement d'articles individuels dans l'entrepôt d'articles (9).

10. Procédé selon l'une des revendications précédentes, **caractérisé en ce qu'**un temps de cycle théorique d'une opération de tri résulte d'un quotient d'un nombre maximal autorisé de poches de transport par une performance de tri de l'unité de tri (11).

11. Installation de transport suspendue destinée à exécuter un procédé selon l'une des revendications précédentes comportant
- un entrepôt d'articles (9), dans lequel des articles individuels sont entreposés individuellement,
- un magasin intermédiaire de commandes (10) pour le stockage intermédiaire des articles individuels d'une commande, le magasin intermédiaire de commandes (10) étant relié à l'entrepôt d'articles (9) quant au transport,
- une unité de tri (11) pour le tri des articles individuels d'une commande, l'unité de tri (11) étant reliée au magasin intermédiaire de commandes (10) quant au transport,
- un poste d'emballage (12) pour l'emballage des articles individuels de la commande préparée, le poste d'emballage (12) étant relié à l'unité de tri (11) quant au transport,
**caractérisée par**
- une unité de commande (7) qui est conçue pour créer une liste de commandes comprenant plusieurs articles individuels et présentant au moins une commande, la création d'une nouvelle liste de commandes est créée après l'écoulement d'un intervalle de temps qui peut être défini de manière variable, l'intervalle de temps commençant à la création de la liste de commandes précédente et la grandeur de l'intervalle de temps étant dépendante de la performance de tri de l'unité de tri (11).

12. Installation de transport suspendue selon la revendication 11, **caractérisée en ce que** l'entrepôt d'articles (9) est conçu sous la forme d'un entrepôt à poches de transport.

13. Installation de transport suspendue selon la revendication 11 ou 12, **caractérisée en ce que** l'entrepôt d'articles (9) présente au moins un carrousel de rotation (16).

14. Installation de transport suspendue selon l'une des revendications 11 à 13, **caractérisée en ce que** le magasin intermédiaire de commandes (10) présente au moins une voie de stockage (17).

15. Installation de transport suspendue selon l'une des revendications 11 à 14, **caractérisée en ce qu'**au moins une unité d'identification (19, 26) pour l'identification des articles individuels, en particulier pour l'identification de poches de transport pour le transport des articles individuels, est prévue, l'au moins une unité d'identification (19, 26) étant en liaison par échange de signaux avec l'unité de commande (7) pour la commande du chemin de transport des marchandises individuelles dans l'installation de transport suspendue (1).
